# EUROPÄISCHE PATENTSCHRIFT

(11) **EP 1 458 993 B1**
(45) Veröffentlichungstag und Bekanntmachung des Hinweises auf die Patenterteilung: **07.06.2006**
(21) Anmeldenummer: 02804850.2
(22) Anmeldetag: 13.12.2002
(51) Int. Cl.: F16G 5/18

(54) **GETRIEBE MIT EINEM UMSCHLINGUNGSMITTEL, INSBESONDERE ZUR KRAFTÜBERTRAGUNG ZWISCHEN ZWEI KEGELSCHEIBENPAAREN DES GETRIEBES**
TRANSMISSION WITH BELT ELEMENTS, ESPECIALLY FOR THE TRANSMISSION OF FORCE BETWEEN TWO PAIRS OF CONICAL DISKS OF THE TRANSMISSION
TRANSMISSION A COURROIE DESTINEE NOTAMMENT A LA TRANSMISSION D'UNE FORCE ENTRE DEUX PAIRES DE DISQUES CONIQUES DE LA TRANSMISSION

(30) Priorität: 14.12.2001 DE 10161503
(43) Veröffentlichungstag der Anmeldung: 22.09.2004
(73) Patentinhaber: LuK Lamellen und Kupplungsbau Beteiligungs KG, 77815 Bühl (DE)
(72) Erfinder: TRILLER, Andreas, 77815 Bühl (DE); TEUBERT, André, 77815 Bühl (DE)
(74) Vertreter: Duschl, Edgar Johannes
(86) Internationale Anmeldenummer: PCT/DE2002/004570
(87) Internationale Veröffentlichungsnummer: WO 2003/052290

(56) Entgegenhaltungen:
- EP-A- 0 741 255
- DE-A- 19 922 827

## Beschreibung

Die Erfindung betrifft ein Getriebe mit stufenlos einstellbarer Übersetzung mit einem Umschlingungsmittel, insbesondere zur Kraftübertragung zwischen zwei Kegelscheibenpaaren des Getriebes

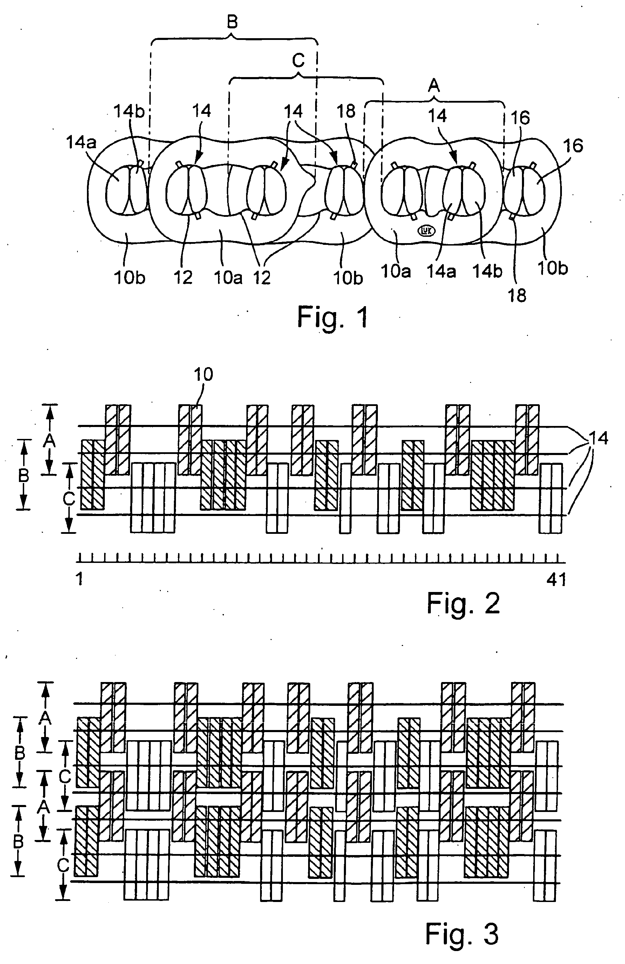

Fig. 1 zeigt ein aus der DE 199 22 827 A1 bekanntes, in Form einer Kette ausgebildetes Umschlingungsmittel in Seitenansicht. Das Umschlingungsmittel ist aus Laschen 10a, 10b zusammengesetzt, die in mehreren, in Fig. 1 nicht sichtbaren, in Längsrichtung des Umschlingungsmittels verlaufenden Längsreihen angeordnet sind. Die Laschen weisen Öffnungen 12 auf, durch die Druckstücke 14 hindurchgreifen, mittels derer die Laschen zu einem Längs- und Querverbund zusammengefügt sind, der das Umschlingungsmittel bildet. Die Öffnung 12 jeder Lasche 10 wird von zwei Druckstücken 14 durchdrungen, die sich am vorderen bzw. hinteren Rand der Öffnung abstützen, wobei zumindest einzelne der zu verschiedenen Längsreihen gehörenden Laschen 10a, 10b in Längsrichtung des Umschlingungsmittels um die Längsabmessung einer Öffnung abzüglich dem Druckstückdurchmesser versetzt angeordnet sind, so dass sich ein quer durch das Umschlingungsmittel hindurchragendes Druckstück an einer Endseite der Öffnungen abstützt und an anderen Druckstücken an der anderen Endseite, wodurch die Übertragung von Längskräften innerhalb des Umschlingungsmittels möglich wird.

Die seitlichen Stirnflächen 16 der Druckstücke sind für einen Reibeingriff mit aufeinander zugewandte Kegelflächen von Kegelscheibenpaaren (nicht dargestellt) ausgebildet, zwischen denen das Umschlingungsmittel Kräfte bzw. Drehmoment überträgt.

Die Druckstücke 14 sind in jeweils zwei Wiegestücke 14a und 14b unterteilt, die sich bei gelenkartigen Bewegungen der Laschen aufeinander abwälzen und dadurch die Reibung an den Laschen des Gelenkes vermindern. Um die Druckstücke 14 verliersicher mit den Laschen 10 zu verbinden, sind am Außenumfang der Druckstücke 14 Ausformungen in Form von Schweißpunkten 18 angebracht.

Umschlingungsmittel gemäß Fig. 1 sind im allgemeinen derart aufgebaut, dass sich die Zuordnung der einzelnen, quer zur Längsrichtung des Umschlingungsmittels miteinander fluchtenden Laschen zu den einzelnen Längsreihen periodisch wiederholt, beispielsweise ist die gegenüber einer ersten Querreihe versetzte zweite Querreihe anders zugeordnet als die wiederum gegenüber der zweiten Querreihe versetzte dritte Querreihe, auf die wiederum die erste Querreihe folgt. Man spricht dann von einem Dreilaschen-Verband.

Die Anordnung der einzelnen Laschen innerhalb der Längsreihen und Querreihen hat entscheidenden Einfluss auf das Betriebsverhalten des Umschlingungsmittels, wie dessen Dauerhaltbarkeit, dessen Reibung usw.

Der Erfindung liegt die Aufgabe zugrunde, ein gattungsgemäßes Getriebe mit Umschlingungsmittel derart auszubilden, dass die innerhalb der Laschen im Verbund des Umschlingungsmittels bzw. der Laschenkette auftretenden Kräfte und damit die Beanspruchung der Laschen und der Druckstücke möglichst gleichmäßig ist.

Diese Aufgabe wird dadurch gelöst, dass erfindungsgemäß im jeweils äußersten Bereich der Kette zwei oder mehr unmittelbar nebeneinander angeordnete Laschen tragen, werden speziell im hochbelasteten äußeren Randbereich des Umschlingungsmittels mittels der dort vorgesehenen Doppellaschen bzw. paarig angeordneten Laschen die Kräfte gleichmäßiger verteilt. In dem Mittenbereich eines solchen erfindungsgemäßen Umschlingungsmittels können in einzelnen Querreihen lediglich einzelne Laschen vorhanden sein.

Das getriebe gemäss der Erfindung ist im Anspruch 1 definiert.

Weiterhin ist es vorteilhaft, das erfindungsgemäße Umschlingungsmittel, wie an sich bekannt, als Dreierverbund auszubilden. Es versteht sich, dass auch andere Verbunde möglich sind.

Weiterhin können jeweils außen mehr als zwei Laschen unmittelbar nebeneinander angeordnet sein.

Es weiterhin vorteilhaft, innerhalb der äußersten, fluchtend unmittelbar nebeneinander angeordneten Laschen zu diesen versetzt eine größere Zahl unmittelbar nebeneinander angeordneter Laschen anzuordnen.

Die Anzahl der Laschen, die in Querrichtung des Umschlingungsmittels gesehen mit ihren Öffnungen zueinander fluchtend hintereinander angeordnet sind, kann einheitlich sein, diese Anzahl kann in anderen Ausgestaltungsbeispielen in Längsrichtung des Umschlingungsmittels unterschiedlich sein.

Weiterhin kann die Anordnung der Laschen bezogen auf die Längsmitte des Umschlingungsmittels symmetrisch oder unsymmetrisch sein.

Die Erfindung wird im folgenden anhand schematischer Zeichnungen beispielsweise und mit weiteren Einzelheiten erläutert.

Es stellen dar:
- Fig. 1: eine Seitenansicht eines als Laschenkette ausgebildeten Umschlingungsmittels,
- Fig. 2: eine Aufsicht auf einen Abschnitt eines Umschlingungsmittels,
- Fig. 3: zwei aneinandergefügte Abschnitte gemäß Fig. 2,
- Fig. 4: eine Aufsicht auf einen Abschnitt einer gegenüber Fig. 2 abgeänderten Laschenkette,
- Fig. 5: eine Aufsicht auf einen Abschnitt einer weiteren Ausführungsform einer Laschenkette,
- Fig. 6: eine Aufsicht auf eine weitere abgeänderte Ausführungsform eines Abschnitts einer Laschenkette,
- Fig. 7: eine Aufsicht auf eine weitere abgeänderte Ausführungsform eines Abschnitts einer Laschenkette,
- Fig. 8: einen Kraftverlauf über die Breite einer Laschenkette,
- Fig. 9: und 10 eine Aufsicht auf einen Abschnitt von zwei weiteren abgeänderten Ausführungsformen einer Laschenkette.

Fig. 2 zeigt eine Aufsicht auf einen Abschnitt einer Laschenkette, deren Laschen 10 in einundvierzig in Längsrichtung der Laschenkette (vertikale Papierrichtung) verlaufenden, nebeneinander angeordneten Längsreihen angeordnet sind. Die Laschenkette ist aus drei unterschiedlichen Querreihen A, B und C zusammengesetzt, innerhalb derer jeweils zwei Druckstücke 14 einen Verbund zwischen jeweils zwei Querreihen vermitteln. Die Querreihen A, B und C sind jeweils um die Längserstreckung der Öffnungen 12 (Fig. 1) abzüglich dem Durchmesser der Druckstücke 14 gegeneinander versetzt.

Wie aus Fig. 2 ersichtlich, ist in Querrichtung der Laschenkette die Anordnung der Laschen in den unterschiedlichen Querreihen derart, dass von links nach rechts gesehen zunächst zwei äußerste Laschen in der Querreihe B angeordnet sind, dann zwei Laschen in der Querreihe A folgen, dann vier Laschen in der Querreihe C folgen, dann zwei Laschen in der Querreihe A folgen, vier Reihen in der Querreihe B folgen, zwei Laschen in der Querreihe A folgen, zwei Laschen in der Querreihe C, zwei Laschen in der Querreihe A, zwei Laschen in der Querreihe B, eine Lasche in der Querreihe C, zwei Laschen in der Querreihe A, zwei Laschen in der Querreihe C, zwei Laschen in der Querreihe B, zwei Laschen in der Querreihe C, zwei Laschen in der Querreihe A, vier Laschen in der Querreihe B, zwei Laschen in der Querreihe A und zwei Laschen in der Querreihe C. Die Querreihe A enthält vierzehn Laschen, die Querreihe B enthält ebenfalls vierzehn Laschen, und die Querreihe C enthält 13 Laschen, die sich in der geschilderten Weise auf die Längsreihen 1 bis 41 aufteilen.

Fig. 3 zeigt zwei aneinandergefügte Abschnitte der Fig. 2, um darzustellen, dass sich das Muster der Fig. 2 jeweils wiederholt.

Während Fig. 1, die in Seitenansicht eine an sich bekannte Laschenkette zeigt, von außen die äußersten Laschen aller drei Querreihen sichtbar sind, sind, wie aus Fig. 3 ersichtlich, bei der Laschenkette mit einem Verbund gemäß Fig. 2 von links her nur die äußersten Laschen der Querreihen B und A sichtbar.

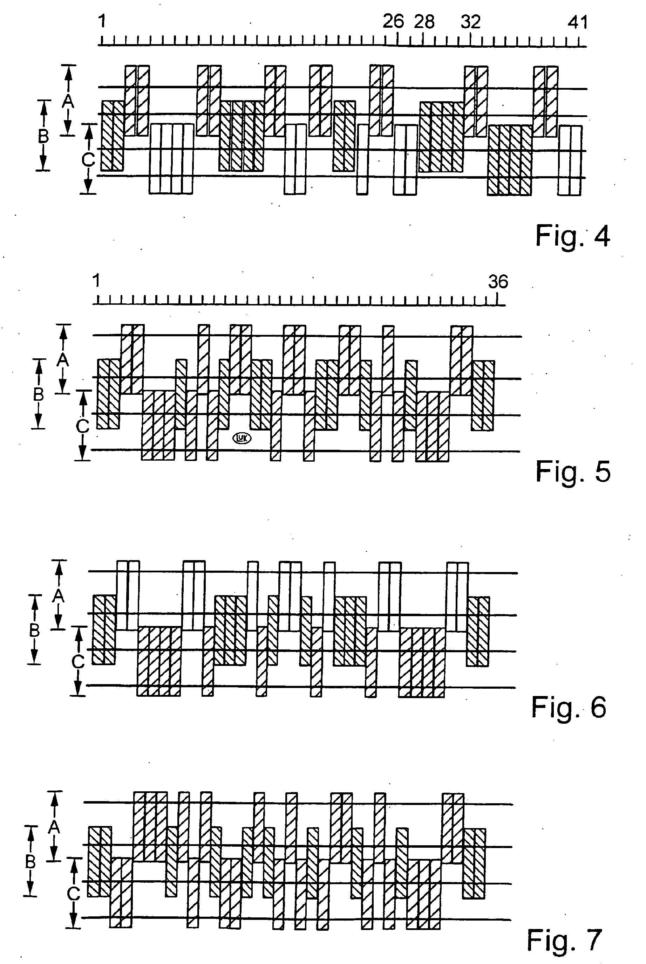

Fig. 4 zeigt eine Anordnung von Laschen einer Laschenkette, die sich von der Anordnung gemäß Fig. 2 dadurch unterscheidet, dass die Längsreihen 28 bis 37 unterschiedlich besetzt sind. Der Aufbau dieser Laschenkette ist im Anspruch 10 detailliert angegeben.

Die Fig. 5 bis 7 zeigen Aufsichten auf Abschnitte einer Laschenkette, die nur aus 36 Längsreihen zusammengesetzt ist. Wiederum sind die jeweils äußersten Laschen unmittelbar paarig nebeneinander angeordnet, wobei diese Laschen jeweils in der Querreihe B angeordnet sind. Das Muster der Fig. 5 und 6 ist bezogen auf die Längsmitte der Laschenkette symmetrisch, wobei in jeder Querreihe zwölf Laschen angeordnet sind.

Die Ausführungsform der Laschenkette gemäß Fig. 7 ist bezüglich der Längsmittelebene der Laschenkette unsymmetrisch, wobei in der Querreihe A zwölf Laschen, in der Querreihe B elf Laschen und in der Querreihe C dreizehn Laschen angeordnet sind.

Die detaillierten Anordnungen sind in den Ansprüchen 11, 12 und 13 angegeben.

Wie aus den Figuren unmittelbar ersichtlich, ist den dargestellten Ausführungsformen der erfindungsgemäßen Laschenkette gemeinsam, dass die jeweils äußersten Laschen (in den Querreihen B und C gemäß Fig. 2 und 4) und in der Querreihe B gemäß Fig. 5 bis 7 jeweils paarig unmittelbar benachbart angeordnet sind. Nach innen folgt jeweils ein weiteres Laschenpaar, an das sich weiter nach innen in einer Querreihe einer Zahl größer zwei unmittelbar nebeneinander angeordnete Laschen anschließen.

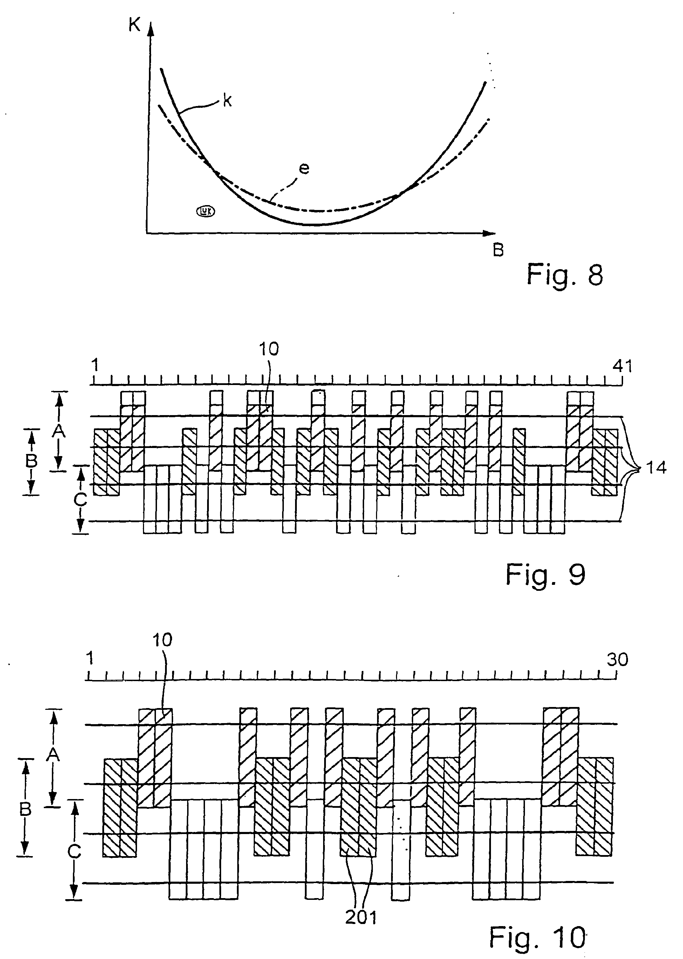

Fig. 8 zeigt die innerhalb der Laschenkette wirksamen Laschenkräfte K abhängig von der Breitenposition B in der Laschenkette. Die durchgezogene Kurve k zeigt die Kraftverteilung bei herkömmlichen Laschenketten. Die strichpunktierte Kurve e zeigt die Kraftverteilung bei erfindungsgemäßen Laschenketten. Wie ersichtlich, sind die Unterschiede der in den Außenbereichen wirksamen Kräfte zu den Kräften im Innenbereich der Laschenkette durch die erfindungsgemäße Anordnung der Laschen deutlich vermindert.

Fig. 9 zeigt eine Aufsicht auf einen Abschnitt einer Laschenkette, deren Laschen 10 in einundvierzig in Längsrichtung der Laschenkette (vertikale Papierrichtung) verlaufenden, nebeneinander angeordneten Längsreihen angeordnet sind. Die Laschenkette ist aus drei unterschiedlichen Querreihen A, B und C zusammengesetzt, innerhalb derer jeweils zwei Druckstücke 14 einen Verbund zwischen jeweils zwei Querreihen vermitteln. Die Querreihen A, B und C sind jeweils um die Längserstreckung der Öffnungen 12 (Fig. 1) abzüglich dem Durchmesser der Druckstücke 14 gegeneinander versetzt.

Wie aus Fig. 9 ersichtlich, ist in Querrichtung der Laschenkette die Anordnung der Laschen in den unterschiedlichen Querreihen derart, dass von links nach rechts gesehen zunächst zwei äußerste Laschen in der Querreihe B angeordnet sind, dann zwei Laschen in der Querreihe A folgen, dann drei Laschen in der Querreihe C folgen. Dann folgt jeweils eine Lasche in den Querreihen B, C, A, C, B. Danach folgen zwei Laschen auf Reihe A. Weiterhin folgt ein Einzellaschenverband auf den Reihen B, C, B, A, B, C und A, wobei diese Lasche die mittlere Lasche des Laschenverbands, nicht jedoch die Symmetrieachse darstellt. Darauf folgt ein weiterer Einzellaschenverband auf den Reihen C, B, A, C, B, A auf den ein Doppellaschenverband auf Reihe B folgt. Daran schließt sich ein weiterer Einzellaschenverband auf den Reihen A, C, A, C, B an. Hierauf folgen drei Laschen auf Reihe C, zwei Laschen auf Reihe A und am Rand zwei Laschen auf Reihe B. Bei diesem unsymmetrischen Laschenverband sind jeweils nur die elf äußersten Laschen symmetrisch angeordnet.

Figur 10 zeigt einen symmetrischen Laschenverband mit dreißig in Querrichtung auf die Reihen A, B, C aufgereihten Laschen 10. Die beiden auf der Reihe B angeordneten Laschen 201 bilden dabei die Symmetrieebene, von der aus sich die Laschen wie folgt jeweils zum Rand Position 1 beziehungsweise 30 anordnen: der Lasche 201 folgen einzelne Laschen auf Reihe A, C, A, zwei Laschen auf Reihe B, eine einzelne Lasche auf Reihe A, vier Laschen auf Reihe C, zwei Laschen auf Reihe A und zwei Laschen auf Reihe B.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombination zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Viel mehr sind im Rahmen der vorliegenden Offenbarung zahlreiche Abänderungen und Modififikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

## Patentansprüche

1. Getriebe mit stufenlos einstellbarer Übersetzung mit einem Umschlingungsmittel, insbesondere zur Kraftübertragung zwischen zwei Kegelscheibenpaaren des Getriebes, enthaltend eine Vielzahl von in mehreren in Längsrichtung des Umschlingungsmittels verlaufenden, nebeneinander angeordneten Reihen angeordnete Laschen mit Öffnungen, und Druckstücke, die durch die Öffnungen hindurchragen und deren Stirnseiten für einen Reibeingriff mit Kegelflächen der Kegelscheibenpaare vorgesehen sind, wobei jede Lasche von zwei in Längsrichtung des Umschlingungsmittels benachbarten Druckstücken durchragt wird und jedes Druckstück wenigstens zwei in Längsrichtung des Umschlingungsmittels zueinander versetzte Laschen durchdringt und wobei sich die Zuordnung der von benachbarten Druckstücken durchdrungenen Laschen zu den Längsreihen in Längsrichtung des Umschlingungsmittels nach jeweils einer vorbestimmten Anzahl benachbarter Druckstücke wiederholt, **dadurch gekennzeichnet, dass** den in jeweils einer äußersten Längsreihe angeordneten Laschen von denselben Druckstückendurchdrungene Laschen in der benachbarten nächstinneren Längsreihe unmittelbar benachbart sind.

2. Getriebe nach Anspruch 1 , **dadurch gekennzeichnet, dass** sich das Muster der Zuordnung der Laschen zu den Längsreihen nach jeweils benachbarten Druckstückenwiederholt.

3. Getriebe nach Anspruch 1 oder 2, **dadurch gekennzeichnet, dass** den in einer äußersten Längsreihe angeordneten Laschen direkt benachbarten Laschen der nächstinneren Längsreihe weitere Laschen unmittelbar benachbart sind.

4. Getriebe nach einem der Ansprüche 1 bis 3, **dadurch gekennzeichnet, dass** einwärts der unmittelbar nebeneinander und zueinander fluchtend angeordneten äußeren Laschen zu diesen versetzt unmittelbar nebeneinander und axial fluchtend Laschen in einer größeren Zahl als die der äußeren Laschen angeordnet sind.

5. Getriebel nach einem der Ansprüche 1 bis 4, **dadurch gekennzeichnet, dass** die Anzahl der Laschen, die in Querrichtung des Umschlingungsmittels gesehen mit ihren Öffnungen zueinander fluchtend hintereinander angeordnet sind, einheitlich ist.

6. Getriebe nach einem der Ansprüche 1 bis 4, **dadurch gekennzeichnet, dass** die Anzahl der Laschen, die in Querrichtung des Umschlingungsmittels gesehen mit ihren Öffnungen zueinander fluchtend hintereinander angeordnet sind, in Längsrichtung des Umschlingungsmittels unterschiedlich ist.

7. Getriebe nach einem der Ansprüche 1 bis 6, **dadurch gekennzeichnet, dass** die Anordnung der Laschen bezogen auf die Längsmitte des Umschlingungsmittels symmetrisch ist.

8. Getriebe nach einem der Ansprüche 1 bis 7, **dadurch gekennzeichnet, dass** die Anordnung der Laschenbezogen auf die Längsmitte des Umschlingungsmittels unsymmetrisch ist.

9. Getriebe nach Anspruch 2, **dadurch gekennzeichnet, dass** das Umschlingungsmittel einundvierzig nebeneinander angeordnete Längsreihen enthält und die Zuordnung der Laschenzu den Reihen R folgende ist: 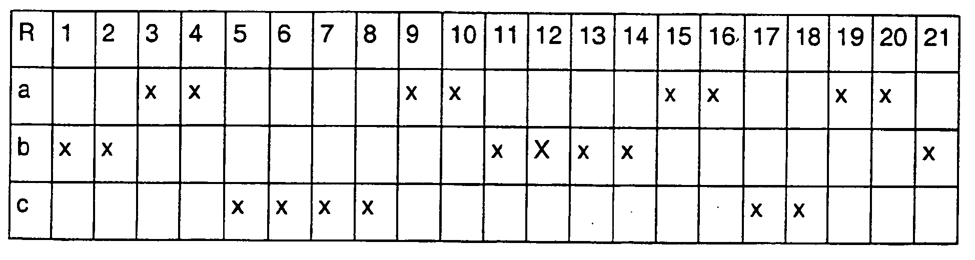 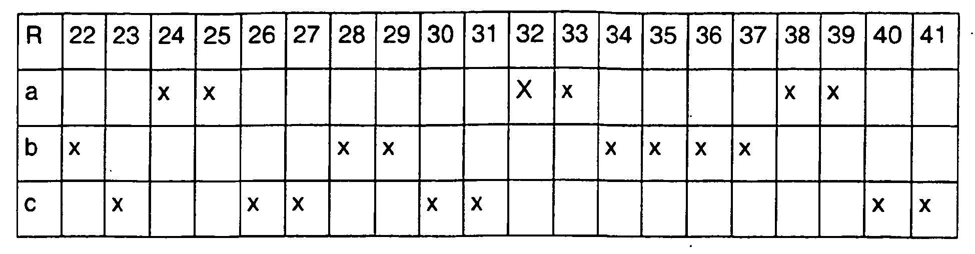
wobei a die Zuordnung einer ersten Querreihe von mit ihren Öffnungen zueinander fluchtend angeordneten Laschen zu den Längsreihen ist,
b die Zuordnung einer gegenüber der ersten Querreihe in Längsrichtung des Umschtingungsmittets um den Abstand benachbarter Druckstücke versetzten zweiten Querreihe zu den Längsreihen ist und
c die Zuordnung einer gegenüber der zweiten Querreihe in Längsrichtung des Umschlingungsmittels um den Abstand benachbarter Druckstücke versetzten dritten Querreihe zu den Längsreihen ist.

10. Getriebe nach Anspruch 2, **dadurch gekennzeichnet, dass** das Umschlingungsmittel einundvierzig nebeneinander angeordnete Reihen R enthält und die Zuordnung der Laschen zu den Reihen folgende ist: 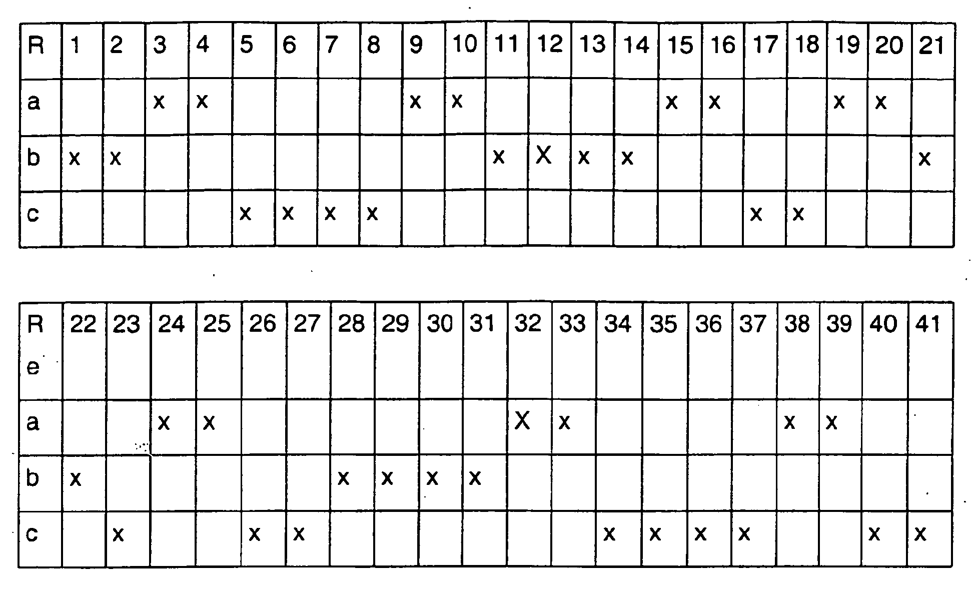
wobei a die Zuordnung einer ersten Querreihe von mit ihren Öffnungen zueinander fluchtend angeordneten Laschen zu den Längsreihen ist,
b die Zuordnung einer gegenüber der ersten Querreihe in Längsrichtung des Umschlingungsmittels um den Abstand benachbarter Druckstücke versetzten zweiten Querreihe zu den Längsreihen ist und
c die Zuordnung einer gegenüber der zweiten Querreihe in Längsrichtung des Umschlingungsmittels um den Abstand benachbarter Druckstücke in Längsrichtung des Umschlingungsmittels versetzten dritten Querreihe zu den Längsreihen ist.

11. Getriebe nach Anspruch 2, **dadurch gekennzeichnet, dass** das Umschlingungsmittel sechsunddreißig nebeneinander angeordnete Reihen R enthält und die Zuordnung der Laschen zu den Reihen folgende ist: 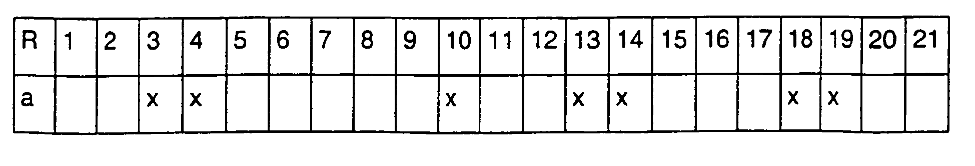 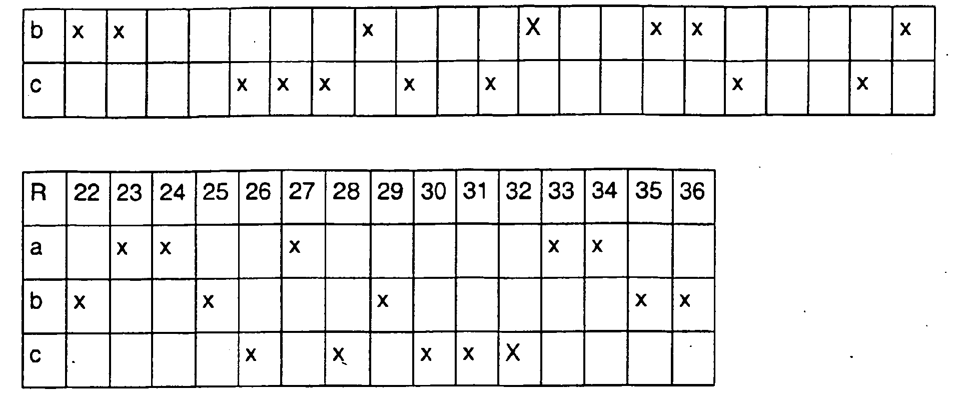
wobei a die Zuordnung einer ersten Querreihe von mit ihren Öffnungen zueinander fluchtend angeordneten Laschen zu den Längsreihen ist,
b die Zuordnung einer gegenüber der ersten Querreihe in Längsrichtung des Umschlingungsmittels um den Abstand benachbarter Druckstücke versetzten zweiten Querreihe zu den Längsreihen ist und
c die Zuordnung einer gegenüber der zweiten Querreihe in Längsrichtung des Umschlingungsmittels um den Abstand benachbarter Druckstücke in Längsrichtung des Umschlingungsmittels versetzten dritten Querreihe zu den Längsreihen ist.

12. Getriebe nach Anspruch 2, **dadurch gekennzeichnet, dass** das Umschlingungsmittel sechsunddreißig nebeneinander angeordnete Reihen R enthält und die Zuordnung der Laschen zu den Reihen folgende ist: 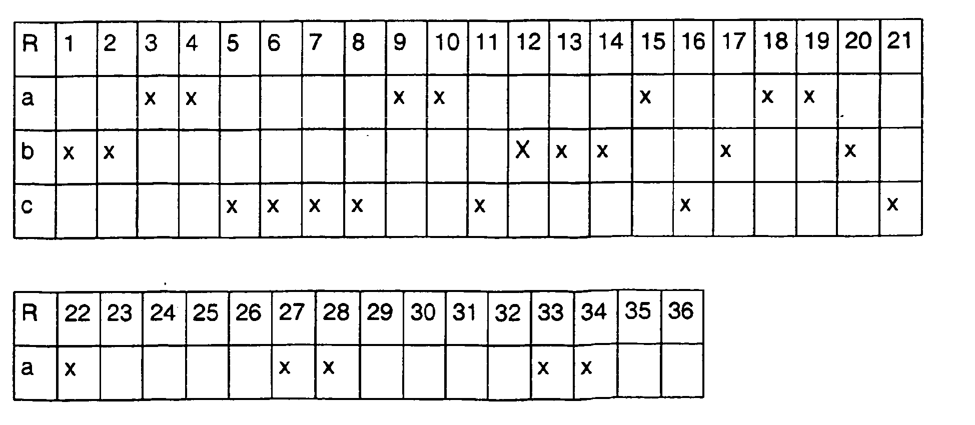 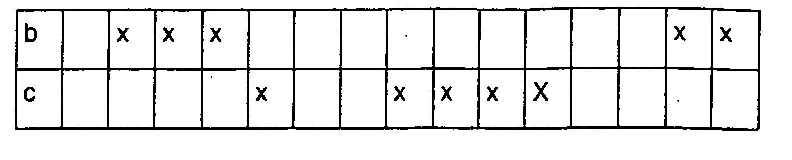
wobei a die Zuordnung einer ersten Querreihe von mit ihren Öffnungen zueinander fluchtend angeordneten Laschen zu den Längsreihen ist,
b die Zuordnung einer gegenüber der ersten Querreihe in Längsrichtung des Umschlingungsmittels um den Abstand benachbarter Druckstücke versetzten zweiten Querreihe zu den Längsreihen ist und
c die Zuordnung einer gegenüber der zweiten Querreihe in Längsrichtung des Umschlingungsmittels um den Abstand benachbarter Druckstücke in Längsrichtung des Umschlingungsmittels versetzten dritten Querreihe zu den Längsreihen ist.

13. Getriebe nach Anspruch 2, **dadurch gekennzeichnet, dass** das Umschlingungsmittel sechsunddreißig nebeneinander angeordnete Reihen R enthält und die Zuordnung der Laschen zu den Reihen folgende ist: 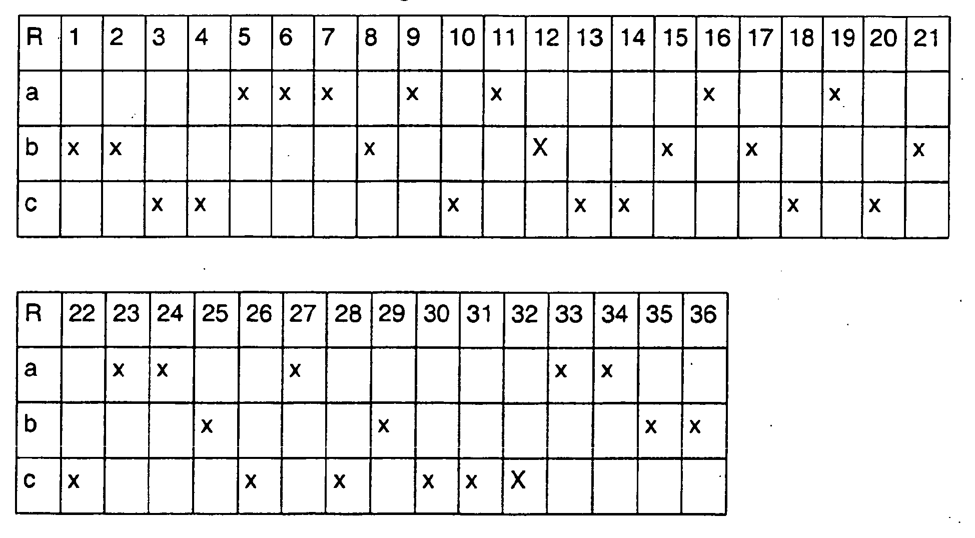
wobei a die Zuordnung einer ersten Querreihe von mit ihren Öffnungen zueinander fluchtend angeordneten Laschen zu den Längsreihen ist,
b die Zuordnung einer gegenüber der ersten Querreihe in Längsrichtung des Umschlingungsmittels um den Abstand benachbarter Druckstücke versetzten zweiten Querreihe zu den Längsreihen ist und c die Zuordnung einer gegenüber der zweiten Querreihe in Längsrichtung des Umschlingungsmittels um den Abstand benachbarter Druckstücke versetzten dritten Querreihe (C) zu den Längsreihen ist.

14. Getriebe nach Anspruch 2, **dadurch gekennzeichnet, dass** das Umschlingungsmittel einundvierzig nebeneinander angeordnete Reihen R enthält und die Zuordnung der Laschen zu den Reihen folgende ist: 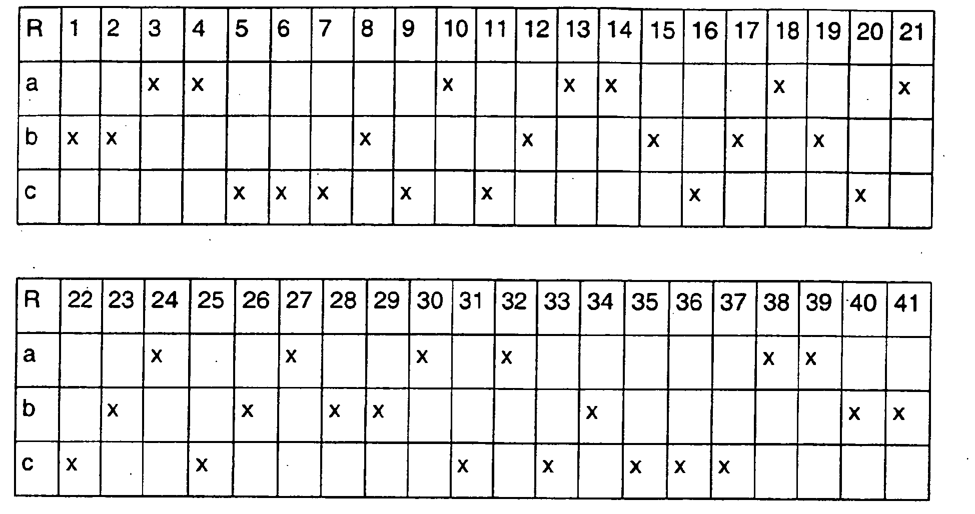
wobei a die Zuordnung einer ersten Querreihe von mit ihren Öffnungen zueinander fluchtend angeordneten Laschen zu den Längsreihen ist,
b die Zuordnung einer gegenüber der ersten Querreihe in Längsrichtung des Umschlingungsmittels um den Abstand benachbarter Druckstücke versetzten zweiten Querreihe zu den Längsreihen ist und
c die Zuordnung einer gegenüber der zweiten Querreihe in Längsrichtung des Umschlingungsmittels um den Abstand benachbarter Druckstücke in Längsrichtung des Umschlingungsmittels versetzten dritten Querreihe zu den Längsreihen ist.

15. Getriebe nach Anspruch 2, **dadurch gekennzeichnet, dass** das Umschlingungsmittel dreißig nebeneinander angeordnete Reihen R enthält und die Zuordnung der Laschen zu den Reihen folgende ist: 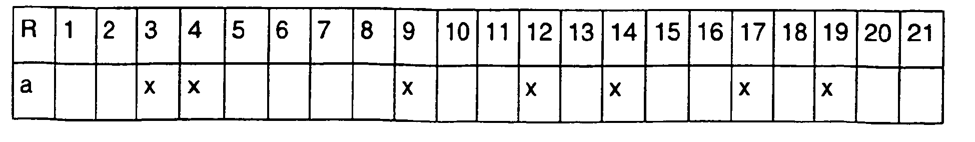 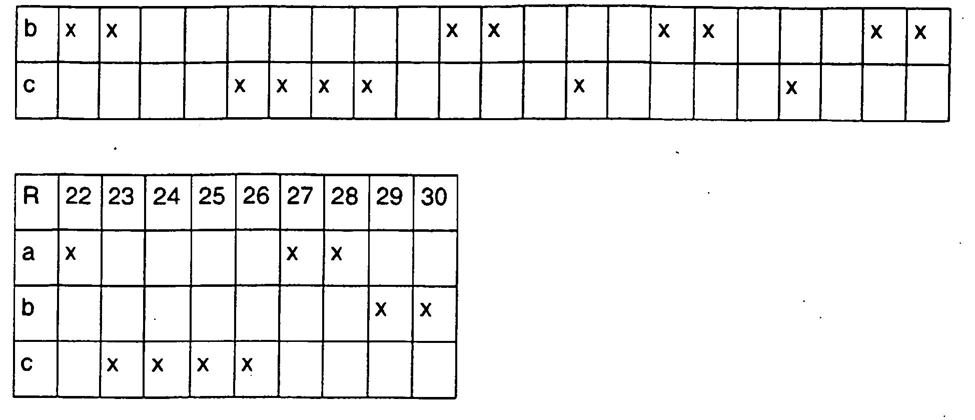
wobei a die Zuordnung einer ersten Querreihe von mit ihren Öffnungen zueinander fluchtend angeordneten Laschen zu den Längsreihen ist,
b die Zuordnung einer gegenüber der ersten Querreihe in Längsrichtung des Umschlingungsmittels um den Abstand benachbarter Druckstücke versetzten zweiten Querreihe zu den Längsreihen ist und
c die Zuordnung einer gegenüber der zweiten Querreihe in Längsrichtung des Umschlingungsmittels um den Abstand benachbarter Druckstücke in Längsrichtung des Umschlingungsmittels versetzten dritten Querreihe zu den Längsreihen ist.

## Claims

1. A transmission with continuously variable transmission ratio, having an endless torque-transmitting means, in particular for transmitting force between two conical disk pairs of the transmission, containing many plates with openings arranged in a plurality of rows arranged side-by-side running in the longitudinal direction of the endless torque-transmitting means, and pressure pieces that protrude through the openings and whose faces are intended for frictional engagement with conical surfaces of the conical disk pairs, where each plate is penetrated by two pressure pieces which are adjacent in the longitudinal direction of the endless torque-transmitting means and each pressure piece protrudes through at least two plates which are offset from each other in the longitudinal direction of the endless torque-transmitting means, and where the assignment of the plates which are penetrated by adjacent pressure pieces to the longitudinal rows in the longitudinal direction of the endless torque-transmitting means repeats after a predetermined number of adjacent pressure pieces,
**characterized in that** immediately adjacent to the plates positioned in an outermost row there are plates in the next inner neighboring longitudinal row, penetrated by the same pressure pieces.

2. A transmission according to Claim 1,
**characterized in that** the pattern of the assignment of the plates to the longitudinal rows repeats after adjacent pressure pieces.

3. A transmission according to Claim 1 or 2,
**characterized in that** additional plates are directly adjacent to the plates of the next longitudinal row on the inner side, which are immediately adjacent to the plates arranged in an outermost longitudinal row.

4. A transmission according to one of Claims 1 to 3,
**characterized in that** inward from the outer plates, which are positioned immediately adjacent to and flush with each other, offset from them, there are plates positioned immediately adjacent to and axially flush with each other, in a greater number than the number of outer plates.

5. A transmission according to one of Claims 1 to 4,
**characterized in that** the number of plates that are arranged one after the other with their openings flush with each other, viewed in the transverse direction of the endless torque-transmitting means, is uniform.

6. A transmission according to one of Claims 1 to 4,
**characterized in that** the number of plates that are arranged one after the other, viewed in the transverse direction of the endless torque-transmitting means, with their openings flush with each other, differs in the longitudinal direction of the endless torque-transmitting means.

7. A transmission according to one of Claims 1 to 6,
**characterized in that** the arrangement of the plates is symmetrical in relation to the longitudinal center of the endless torque-transmitting means.

8. A transmission according to one of Claims 1 to 7,
**characterized in that** the arrangement of the plates is asymmetrical in relation to the longitudinal center of the endless torque-transmitting means.

9. A transmission according to Claim 2,
**characterized in that** the endless torque-transmitting means includes forty-one longitudinal rows arranged side-by-side, and the assignment of the plates to the rows R is as follows: 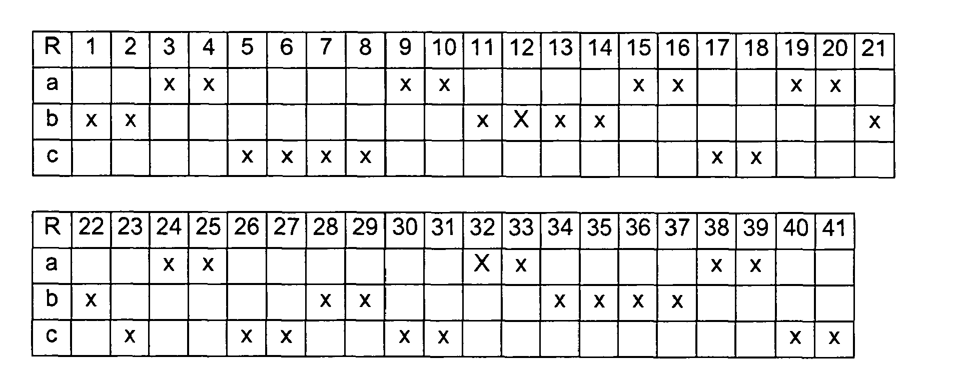
where a is the assignment of a first transverse row of plates, arranged with their openings flush with each other, to the longitudinal rows,
b is the assignment of a second transverse row, which is offset from the first transverse row in the longitudinal direction of the endless torque-transmitting means by the interval between adjacent pressure pieces, to the longitudinal rows, and
c is the assignment of a third transverse row, which is offset from the second transverse row in the longitudinal direction of the endless torque-transmitting means by the interval between adjacent pressure pieces, to the longitudinal rows.

10. A transmission according to Claim 2,
**characterized in that** the endless torque-transmitting means includes forty-one rows R arranged side-by-side, and the assignment of the plates to the rows R is as follows: 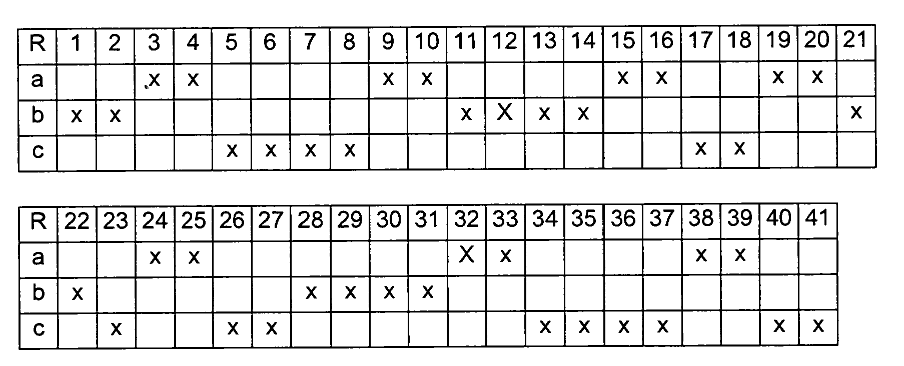
where a is the assignment of a first transverse row of plates, arranged with their openings flush with each other, to the longitudinal rows,
b is the assignment of a second transverse row, which is offset from the first transverse row in the longitudinal direction of the endless torque-transmitting means by the interval between adjacent pressure pieces, to the longitudinal rows, and
c is the assignment of a third transverse row, which is offset from the second transverse row in the longitudinal direction of the endless torque-transmitting means by the interval between adjacent pressure pieces in the longitudinal direction of the endless torque-transmitting means, to the longitudinal rows.

11. A transmission according to Claim 2,
**characterized in that** the endless torque-transmitting means includes thirty-six rows R arranged side-by-side, and the assignment of the plates to the rows R is as follows: 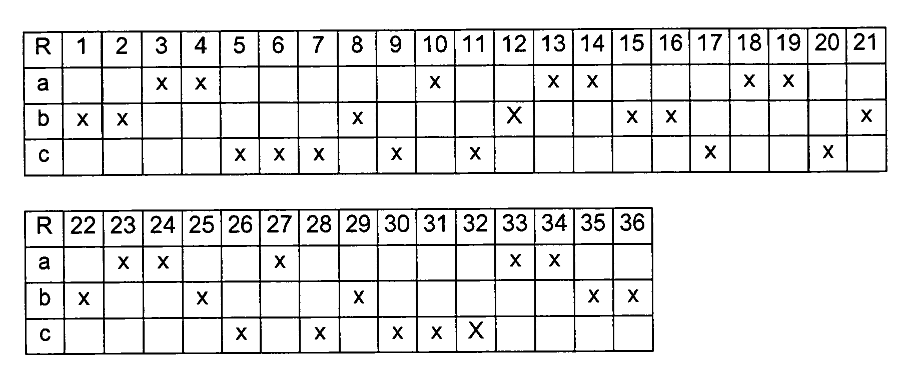
where a is the assignment of a first transverse row of plates, arranged with their openings flush with each other, to the longitudinal rows,
b is the assignment of a second transverse row, which is offset from the first transverse row in the longitudinal direction of the endless torque-transmitting means by the interval between adjacent pressure pieces, to the longitudinal rows, and
c is the assignment of a third transverse row, which is offset from the second transverse row in the longitudinal direction of the endless torque-transmitting means by the interval between adjacent pressure pieces in the longitudinal direction of the endless torque-transmitting means, to the longitudinal rows.

12. A transmission according to Claim 2,
**characterized in that** the endless torque-transmitting means includes thirty-six rows R arranged side-by-side, and the assignment of the plates to the rows R is as follows: 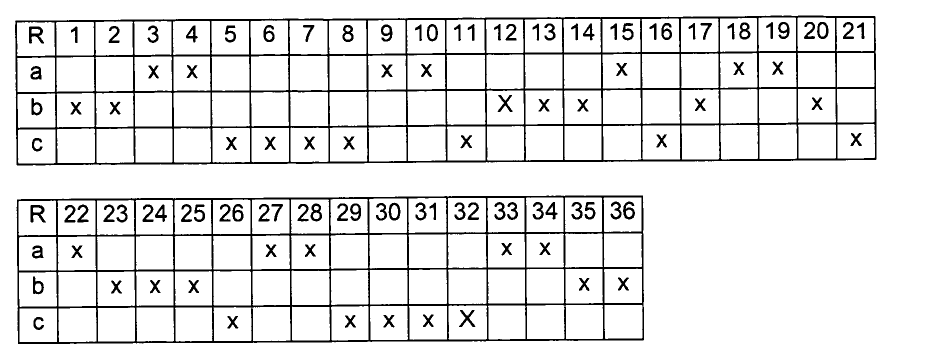
where a is the assignment of a first transverse row of plates, arranged with their openings flush with each other, to the longitudinal rows,
b is the assignment of a second transverse row, which is offset from the first transverse row in the longitudinal direction of the endless torque-transmitting means by the interval between adjacent pressure pieces, to the longitudinal rows, and
c is the assignment of a third transverse row, which is offset from the second transverse row in the longitudinal direction of the endless torque-transmitting means by the interval between adjacent pressure pieces in the longitudinal direction of the endless torque-transmitting means, to the longitudinal rows.

13. A transmission according to Claim 2,
**characterized in that** the endless torque-transmitting means includes thirty-six rows R arranged side-by-side, and the assignment of the plates to the rows is as follows: 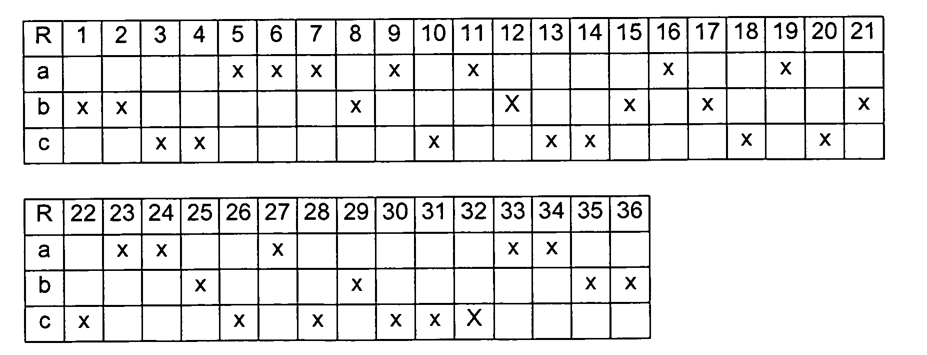
where a is the assignment of a first transverse row of plates, arranged with their openings flush with each other, to the longitudinal rows,
b is the assignment of a second transverse row, which is offset from the first transverse row in the longitudinal direction of the endless torque-transmitting means by the interval between adjacent pressure pieces, to the longitudinal rows, and
c is the assignment of a third transverse row (C), which is offset from the second transverse row in the longitudinal direction of the endless torque-transmitting means by the interval between adjacent pressure pieces, to the longitudinal rows.

14. A transmission according to Claim 2,
**characterized in that** the endless torque-transmitting means includes forty-one rows R arranged side-by-side, and the assignment of the plates to the rows R is as follows: 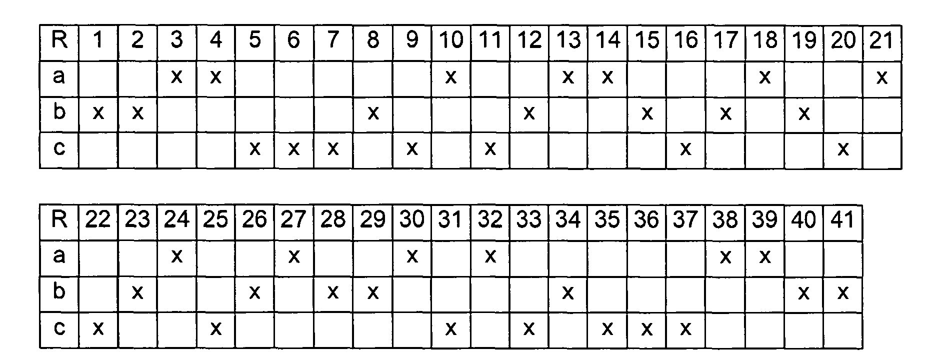
where a is the assignment of a first transverse row of plates, arranged with their openings flush with each other, to the longitudinal rows,
b is the assignment of a second transverse row, which is offset from the first transverse row in the longitudinal direction of the endless torque-transmitting means by the interval between adjacent pressure pieces, to the longitudinal rows, and
c is the assignment of a third transverse row, which is offset from the second transverse row in the longitudinal direction of the endless torque-transmitting means by the interval between adjacent pressure pieces in the longitudinal direction of the endless torque-transmitting means, to the longitudinal rows.

15. A transmission according to Claim 2,
**characterized in that** the endless torque-transmitting means includes thirty rows R arranged side-by-side, and the assignment of the plates to the rows R is as follows: 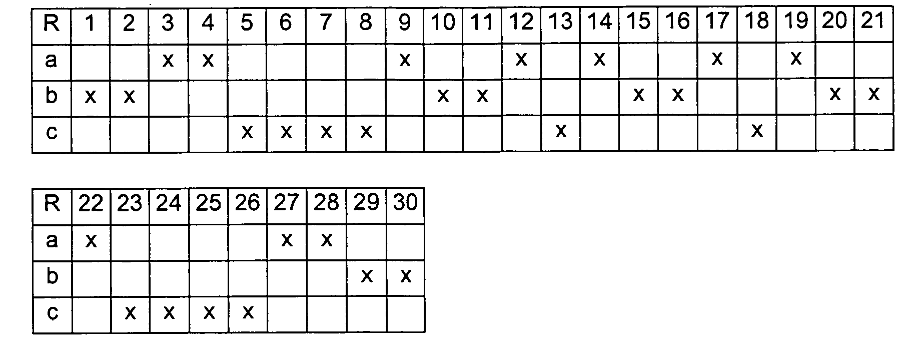
where a is the assignment of a first transverse row of plates, arranged with their openings flush with each other, to the longitudinal rows,
b is the assignment of a second transverse row, which is offset from the first transverse row in the longitudinal direction of the endless torque-transmitting means by the interval between adjacent pressure pieces, to the longitudinal rows, and
c is the assignment of a third transverse row, which is offset from the second transverse row in the longitudinal direction of the endless torque-transmitting means by the interval between adjacent pressure pieces in the longitudinal direction of the endless torque-transmitting means, to the longitudinal rows.

## Revendications

1. Transmission à rapport réglable par variation continue, comprenant un moyen à enroulement, en particulier pour la transmission de forces entre deux paires de poulies coniques de la transmission, comprenant une multiplicité de maillons, avec des ouvertures, disposés dans plusieurs rangées s'étendant suivant la direction longitudinale du moyen à enroulement et disposées les unes à côté des autres, et comprenant des pièces d'appui qui traversent les ouvertures, et les faces frontales de ces pièces d'appui sont prévues pour un contact par frottement avec des surfaces coniques des paires de poulies coniques, où chaque maillon est traversé par deux pièces d'appui voisines, suivant la direction longitudinale du moyen à enroulement, et chaque pièce d'appui traverse au moins deux maillons décalés l'un par rapport à l'autre, dans la direction longitudinale du moyen à enroulement, et où l'affectation - par rapport aux rangées longitudinales - des maillons traversés par des pièces d'appui voisines, suivant la direction longitudinale du moyen à enroulement, se répète à chaque fois après un nombre prédéterminé de pièces d'appui voisines,
**caractérisée en ce que** les maillons disposés respectivement dans une rangée longitudinale placée le plus à l'extérieur sont immédiatement voisins des mêmes maillons traversés par des pièces d'appui, dans la rangée longitudinale voisine placée le plus près à l'intérieur.

2. Transmission selon la revendication 1, **caractérisée en ce que** le modèle de l'affectation des maillons, par rapport aux rangées longitudinales, se répète à chaque fois après des pièces d'appui voisines.

3. Transmission selon la revendication 1 ou 2, **caractérisée en ce que** d'autres maillons sont immédiatement voisins des maillons de la rangée longitudinale placée le plus près à l'intérieur, directement voisins de maillons disposés dans une rangée longitudinale placée le plus à l'extérieur.

4. Transmission selon l'une quelconque des revendications 1 à 3, **caractérisée en ce que**, à l'intérieur des maillons extérieurs disposés immédiatement les uns à côté des autres et alignés entre eux, des maillons, décalés par rapport à ces maillons extérieurs, sont, suivant un nombre supérieur à celui des maillons extérieurs, disposés immédiatement les uns à côté des autres et alignés axialement.

5. Transmission selon l'une quelconque des revendications 1 à 4, **caractérisée en ce que** le nombre de maillons est uniforme, maillons qui, en regardant suivant la direction transversale du moyen à enroulement, sont, avec leurs ouvertures, disposés les uns derrière les autres et alignés entre eux.

6. Transmission selon l'une quelconque des revendications 1 à 4, **caractérisée en ce que** le nombre de maillons est variable suivant la direction longitudinale du moyen à enroulement, maillons qui, en regardant suivant la direction transversale du moyen à enroulement, sont, avec leurs ouvertures, disposés les uns derrière les autres et alignés entre eux.

7. Transmission selon l'une quelconque des revendications 1 à 6, **caractérisée en ce que** l'agencement des maillons est symétrique par rapport au milieu longitudinal du moyen à enroulement.

8. Transmission selon l'une quelconque des revendications 1 à 7, **caractérisée en ce que** l'agencement des maillons est non symétrique par rapport au milieu longitudinal du moyen à enroulement.

9. Transmission selon la revendication 2, **caractérisée en ce que** le moyen à enroulement comprend quarante et une rangées longitudinales disposées les unes à côté des autres, et l'affectation des maillons, par rapport aux rangées R, est la suivante : 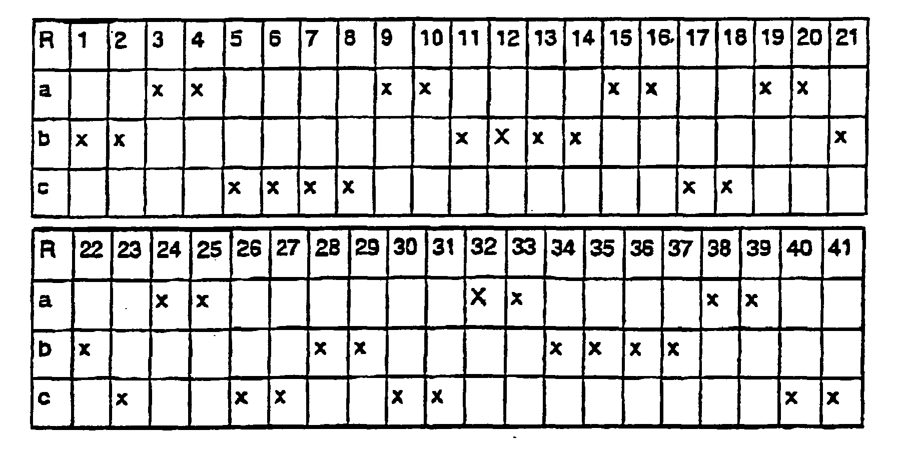 où
a est l'affectation, par rapport aux rangées longitudinales, d'une première rangée transversale de maillons, avec leurs ouvertures, disposés en étant alignés entre eux,
b est l'affectation, par rapport aux rangées longitudinales, d'une deuxième rangée transversale décalée de l'intervalle de pièces d'appui voisines, par rapport à la première rangée transversale suivant la direction longitudinale du moyen à enroulement, et
c est l'affectation, par rapport aux rangées longitudinales, d'une troisième rangée transversale décalée de l'intervalle de pièces d'appui voisines, par rapport à la deuxième rangée transversale suivant la direction longitudinale du moyen à enroulement.

10. Transmission selon la revendication 2, **caractérisée en ce que** le moyen à enroulement comprend quarante et une rangées R disposées les unes à côté des autres, et l'affectation des maillons, par rapport aux rangées, est la suivante : 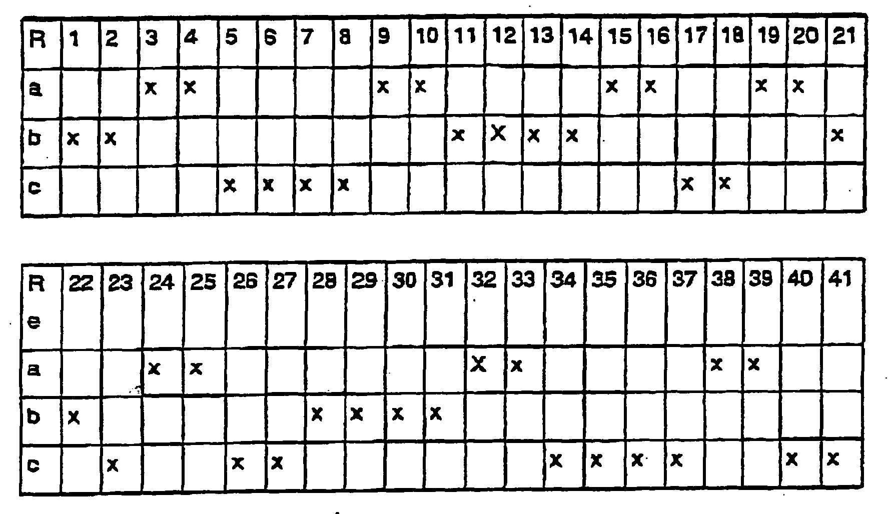 où
a est l'affectation, par rapport aux rangées longitudinales, d'une première rangée transversale de maillons, avec leurs ouvertures, disposés en étant alignés entre eux,
b est l'affectation, par rapport aux rangées longitudinales, d'une deuxième rangée transversale décalée de l'intervalle de pièces d'appui voisines, par rapport à la première rangée transversale suivant la direction longitudinale du moyen à enroulement, et
c est l'affectation, par rapport aux rangées longitudinales, d'une troisième rangée transversale décalée de l'intervalle de pièces d'appui voisines suivant la direction longitudinale du moyen à enroulement, par rapport à la deuxième rangée transversale suivant la direction longitudinale du moyen à enroulement.

11. Transmission selon la revendication 2, **caractérisée en ce que** le moyen à enroulement comprend trente six rangées R disposées les unes à côté des autres, et l'affectation des maillons, par rapport aux rangées, est la suivante : 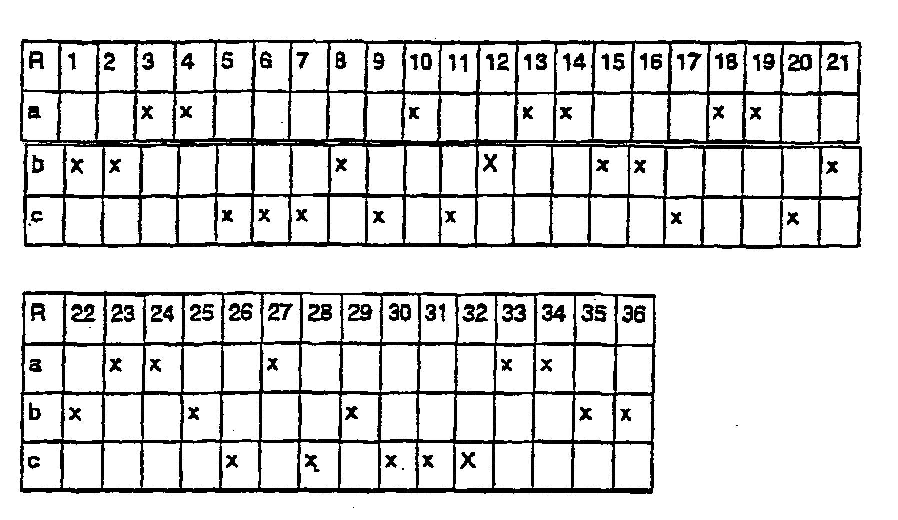 où
a est l'affectation, par rapport aux rangées longitudinales, d'une première rangée transversale de maillons, avec leurs ouvertures, disposés en étant alignés entre eux,
b est l'affectation, par rapport aux rangées longitudinales, d'une deuxième rangée transversale décalée de l'intervalle de pièces d'appui voisines, par rapport à la première rangée transversale suivant la direction longitudinale du moyen à enroulement, et
c est l'affectation, par rapport aux rangées longitudinales, d'une troisième rangée transversale décalée de l'intervalle de pièces d'appui voisines suivant la direction longitudinale du moyen à enroulement, par rapport à la deuxième rangée transversale suivant la direction longitudinale du moyen à enroulement.

12. Transmission selon la revendication 2, **caractérisée en ce que** le moyen à enroulement comprend trente six rangées R disposées les unes à côté des autres, et l'affectation des maillons, par rapport aux rangées, est la suivante : 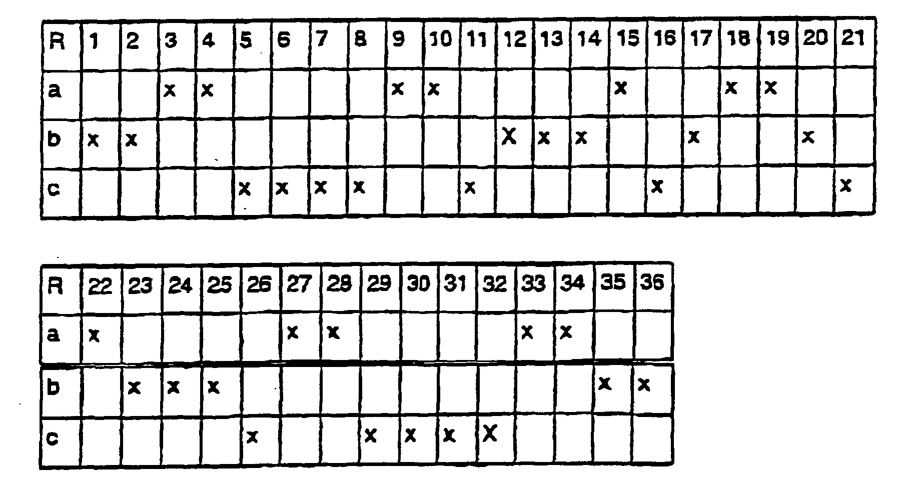 où
a est l'affectation, par rapport aux rangées longitudinales, d'une première rangée transversale de maillons, avec leurs ouvertures, disposés en étant alignés entre eux,
b est l'affectation, par rapport aux rangées longitudinales, d'une deuxième rangée transversale décalée de l'intervalle de pièces d'appui voisines, par rapport à la première rangée transversale suivant la direction longitudinale du moyen à enroulement, et
c est l'affectation, par rapport aux rangées longitudinales, d'une troisième rangée transversale décalée de l'intervalle de pièces d'appui voisines suivant la direction longitudinale du moyen à enroulement, par rapport à la deuxième rangée transversale suivant la direction longitudinale du moyen à enroulement.

13. Transmission selon la revendication 2, **caractérisée en ce que** le moyen à enroulement comprend trente six rangées R disposées les unes à côté des autres, et l'affectation des maillons, par rapport aux rangées, est la suivante : 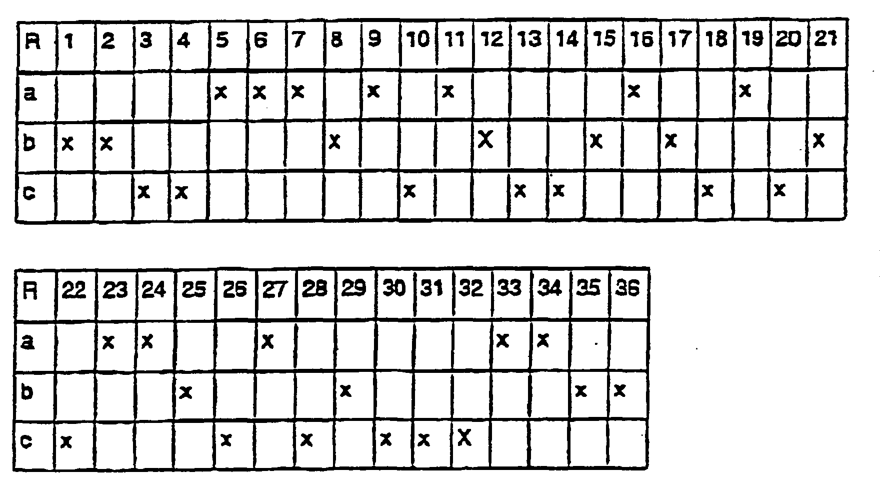 où
a est l'affectation, par rapport aux rangées longitudinales, d'une première rangée transversale de maillons, avec leurs ouvertures, disposés en étant alignés entre eux,
b est l'affectation, par rapport aux rangées longitudinales, d'une deuxième rangée transversale décalée de l'intervalle de pièces d'appui voisines, par rapport à la première rangée transversale suivant la direction longitudinale du moyen à enroulement, et
c est l'affectation, par rapport aux rangées longitudinales, d'une troisième rangée transversale (C) décalée de l'intervalle de pièces d'appui voisines, par rapport à la deuxième rangée transversale suivant la direction longitudinale du moyen à enroulement.

14. Transmission selon la revendication 2, **caractérisée en ce que** le moyen à enroulement comprend quarante et une rangées R disposées les unes à côté des autres, et l'affectation des maillons, par rapport aux rangées, est la suivante : 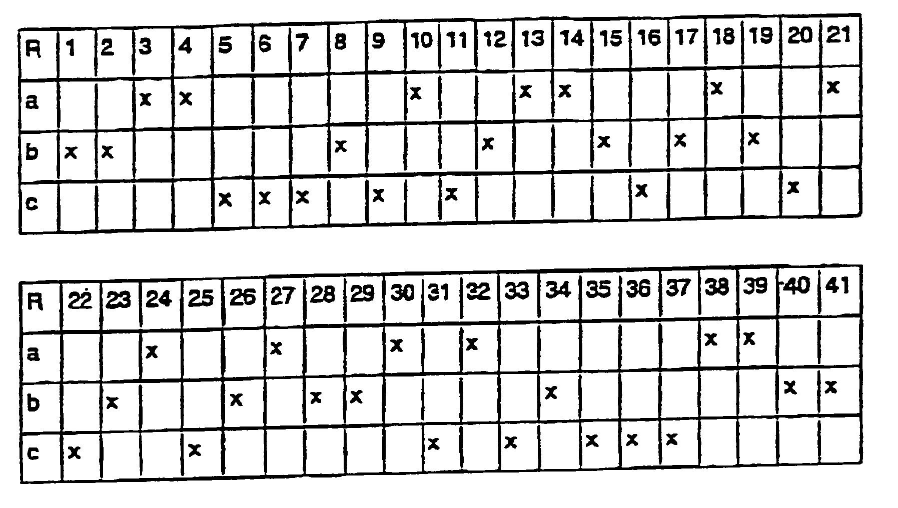 où
a est l'affectation, par rapport aux rangées longitudinales, d'une première rangée transversale de maillons, avec leurs ouvertures, disposés en étant alignés entre eux,
b est l'affectation, par rapport aux rangées longitudinales, d'une deuxième rangée transversale décalée de l'intervalle de pièces d'appui voisines, par rapport à la première rangée transversale suivant la direction longitudinale du moyen à enroulement, et
c est l'affectation, par rapport aux rangées longitudinales, d'une troisième rangée transversale décalée de l'intervalle de pièces d'appui voisines suivant la direction longitudinale du moyen à enroulement, par rapport à la deuxième rangée transversale suivant la direction longitudinale du moyen à enroulement.

15. Transmission selon la revendication 2, **caractérisée en ce que** le moyen à enroulement comprend trente rangées R disposées les unes à côté des autres, et l'affectation des maillons, par rapport aux rangées, est la suivante : 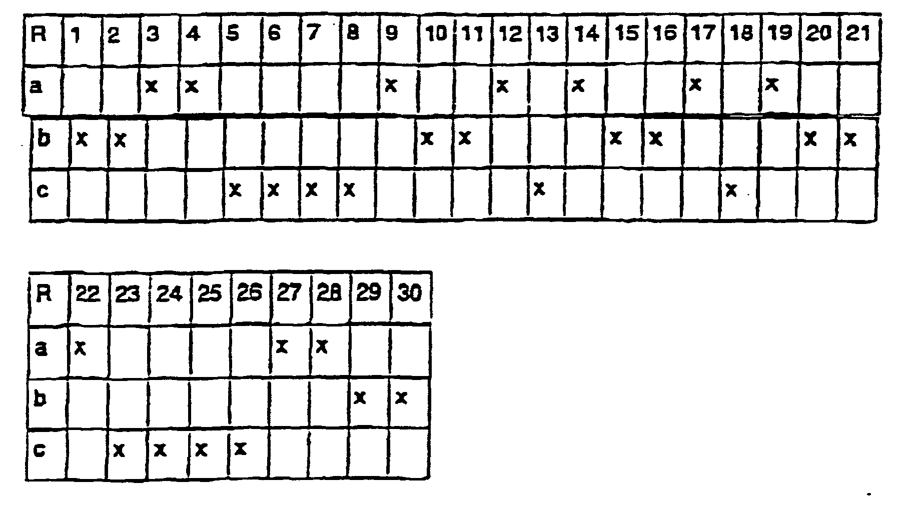 où
a est l'affectation, par rapport aux rangées longitudinales, d'une première rangée transversale de maillons, avec leurs ouvertures, disposés en étant alignés entre eux,
b est l'affectation, par rapport aux rangées longitudinales, d'une deuxième rangée transversale décalée de l'intervalle de pièces d'appui voisines, par rapport à la première rangée transversale suivant la direction longitudinale du moyen à enroulement, et
c est l'affectation, par rapport aux rangées longitudinales, d'une troisième rangée transversale décalée de l'intervalle de pièces d'appui voisines suivant la direction longitudinale du moyen à enroulement, par rapport à la deuxième rangée transversale suivant la direction longitudinale du moyen à enroulement.
